# EUROPEAN PATENT APPLICATION

(11) **EP 2 687 356 A1**
(43) Date of publication of application: **22.01.2014**
(21) Application number: 12177268.5
(22) Date of filing: 20.07.2012
(51) Int. Cl.: B29C 70/22, B29C 70/54, B29B 11/16

(54) **A unidirectional reinforcement and a method of producing a unidirectional reinforcement**

(71) Applicant: Ahlstrom Corporation, 00100 Helsinki (FI)
(72) Inventor: Bergström, Rainer, FI-50120 Mikkeli (FI)
(74) Representative: Ansala, Jyrki Matti

(57) **Abstract**

The present invention relates to a unidirectional reinforcement and a method of producing a unidirectional reinforcement. The unidirectional reinforcement of the present invention may be used in all such applications where high quality and strength is required. The unidirectional reinforcement is especially applicable in the manufacture of wind turbine blades, boats etc.

## Description

### Technical field

The present invention relates to a unidirectional reinforcement and a method of producing a unidirectional reinforcement. The unidirectional reinforcement of the present invention may be used in all such applications that reinforcements are generally needed and especially in such applications where high quality and strength is required. The unidirectional reinforcement of the present invention is especially applicable in the manufacture of wind turbine blades, boats etc.

### Background art

When manufacturing composite and laminate products using various fibers, like for instance glass fibers, carbon fibers, aramid fibers etc. for the manufacture of boat, automotive and wind turbine parts, for example, the manufacture starts with the production of an appropriate fiber reinforcement like woven structure or unidirectional or multi-axial fabric, which is, then, placed in a mold used in the manufacture of the intermediate or end product. The mold has, naturally, the shape of the end product meaning that the shape may sometimes be very complicated, and require substantial shaping of the reinforcement when placed in the mold. Normally several layers, up to tens of layers, of reinforcements are placed one on top of another in the mold and a thermosetting resin like epoxy mixed with hardener or unsaturated polyester resin is introduced in the mold for forming a fiber-reinforced composite article. Practice has shown that when the end product has to resist high mechanical loads, unidirectional reinforcements, which may be held together by means of stitching, are a preferred choice in its manufacture. Such unidirectional reinforcements are made of rovings or tows, generally called as reinforcing fibers.

In order to be able to handle the unidirectional reinforcement, its rovings have to be anchored or bonded to each other in a suitable manner. Prior art knows, in principle, two different mechanical methods for such a purpose. One method is to secure the rovings by means of stitching (e.g. warp knitting). The stitching yarns form knitting loops, i.e. stitches, which are holding the actual reinforcing rovings, in their place in the reinforcement. The stitches are formed by various knitting elements, e.g. by needles, which penetrate the layer or layers of reinforcing fibers according to the known warp knitting technique. The stitches may form several well known patterns like for instance chain or tricot etc. The stitching yarn is typically, but not necessarily, texturized or non-texturized polyester (polyethylene terephthalate) filament yarn having a thickness from about 34 dtex to about 167 dtex and comprising tens of filaments e.g. 24 filaments. Another mechanical method is to use weaving technique to anchor the longitudinal warp yarns with light weight weft yarns in their respective place. As weft yarns, among others, hot-melt coated yarns have been used. After heating and cooling the hot melt binder has given considerable stability. Yet the weaving alternative is not any more considered favorable as the reinforcing yarns form kinks when crossing over the weft yarns leading to stress concentrations and lower mechanical properties than knitted versions. The hot melt binder yarns have been found to create local disturbance in matrix curing and are not either favored any more in the trade. As a further, chemical, method attempts have been made to bond the unidirectional rovings together by means of various thermoplastic binders. However, mainly due to problems in resin permeability, handling stiffness and wet-out speed, these reinforcements and method have not been taken into use in wider scale.

The unidirectional reinforcement may be formed of a single layer of rovings arranged side by side, but it may as well be formed of two or more layers of rovings, preferably, but not necessarily, bonded together. The construction of the reinforcement depends on the target areal weight and the tex number of rovings. For instance if a high areal weight is desired, and a thin roving is used, it is obvious that several layers of rovings are needed. In an opposite example, i.e. where a reinforcement with low areal weight is desired and a thick roving is used in its manufacture, it is possible that the reinforcement has only one single layer of rovings.

The end product, i.e. laminate may be made of a number of such unidirectional reinforcements either by arranging the layers of reinforcements such that, in the end product, the rovings of each layer are parallel or some layers are oriented in other directions according to loads the laminate construction is subjected to or by first manufacturing fabrics of several layers of unidirectional reinforcements so that the rovings of adjacent layers form a certain angle, and thereafter using the fabrics thus formed in the production of the end product. Such fabrics are called biaxial, triaxial, quadaxial etc. fabrics depending on the number of different fiber orientations therein.

Both these basic structures, i.e. mechanically and chemically bonded, of unidirectional reinforcements have their own problems.

Firstly, in a stitched reinforcement the stitches and especially the stitching yarns cause local distortions, i.e. bends or "kinks" in the otherwise straight reinforcing fiber alignment. This is partly surprising as the stitched reinforcements originally were developed and introduced to the trade as not having "kinks". For woven versions the kinks have been a known problem. These bends or kinks are considered to be the root cause of reduction in static and dynamic mechanical properties of laminates. The use of stitches results in other problems, too. The resin distribution in fiber bundles is uneven as at the stitches the fibers in fiber bundles are pressed more tightly together than elsewhere in the bundle. Also, uneven fiber distribution (due to the stitches tying the fibers locally more tightly at the stitches) leads to uneven stress distribution in laminate structure causing especially in dynamic loading a risk of premature breakage.

Secondly, when the rovings are anchored to each other chemically, i.e. by means of thermoplastic binder, the reinforcement has a couple of problems, too. To start with, the bonding makes the reinforcement relatively stiff, whereby it is hard to position the reinforcement in the mold (i.e. make the reinforcement follow the contours of the mold), the harder the more complex shapes the mold has. However, choosing carefully the bonding agent, normally a thermoplastic binder, for instance in powder form, the shaping properties (mainly flexibility) of the reinforcement may be brought to an acceptable level.

Thirdly, it has also been suggested that an additional net or layer of, for instance, chopped strand mat could give a unidirectional reinforcement the transverse stability it requires, but such an additional layer increases risk for void formation, weight, thickness and costs of the final product.

Yet another problem relating to the bonding of the rovings in the reinforcement is that the rovings may locally be so tightly against each other in the molding stage, this being emphasized by the compression force of the vacuum infusion process, that the flow of resin to fill all open cavities in and between the reinforcement layers in the mold is very slow unless any specific measures are taken. In other words, the permeability of the reinforcement is very low. Good resin permeability is, however, vital for the practical execution of the molding process. The molding process has been speeded up by utilizing pressure difference when feeding resin in the mold. It is common practice to apply either Vacuum Infusion technology or Resin Transfer Molding (RTM) technology for distributing the resin all over the reinforcement layers in the mold. However, sometimes despite various measures, like vacuum and/or raised feed pressure, small air cavities tend to remain in the reinforcement reducing significantly the strength properties of the laminate. The main reason for the air cavities is the tight positioning and bonding of the rovings against each other in the reinforcement such that its permeability to resin is very low.

Sometimes when using unidirectional reinforcements, especially in woven form, some assisting or additional yarns have been added in transverse direction for improving transverse stability. Typically the yarns are hot-melt coated glass fiber yarns (twisted bundles of glass filaments - each bundle having typically 60 or more filaments, each filament having a diameter of 10 - 15 µm) and in coated form tex number typically 100 - 200 tex. The hot-melt coating of the yarns is molten, whereby it flows in the void volumes in connection with the rovings and thus bonds the rovings together. Also the remaining glass filaments remain on the rovings transverse thereto and give the reinforcement transverse stability. Hot melt coating is typically conflicting with the infusion resin matrix as the relative amount of binder is locally very high, causing local weak areas in the laminate.

Also, the use of assisting or additional yarns in unidirectional reinforcements will increase unnecessarily weight and possibly cause local fiber distortion, which are, by nature, undesirable effects. Furthermore transverse reinforcing fibers, or for instance fibers oriented in 45 degree direction, may also create micro-cracks when these fibers, normally glass fibers, are broken during the loading of the construction from which more severe fatigue cracks destroying the stability of the end product may originate. The reason for the latter problem is the fact that elongation at break of the glass fiber yarn is significantly smaller than that of the matrix in transverse direction. And still further the glass fiber yarns or rovings deform when subjected to vacuum compressing pressure losing their round cross section such that their cross section under pressure is oval or even flat. This happens as the multifilament yarn form allows the individual filaments to move sideways leading practically to a flat cross section formation.

Thus both ways of holding the unidirectional reinforcement in shape or undistorted in transverse direction have their own drawbacks. However, as the stitching has a tension-related problem, which is caused by the basic feature of stitching, i.e. the tightening of a stitch round one or more rovings, it is, in practice, extremely difficult to get rid of this basic feature. Thus, it appears that the bonding of the rovings in shape by means of a thermoplastic binder is probably the way the reinforcements will be made in the future, specifically if fatigue properties need to be optimized. Therefore, new ways to improve the permeability of the reinforcement to resin has been investigated.

One way to improve the permeability of the reinforcement is to provide the reinforcement with flow channels for resin, the flow channels allowing the resin to flow quickly in the reinforcement. For instance, EP-B1-1667838 discusses the formation of flow channels in a composite fabric formed of a plurality of substantially parallel, coaxially aligned tow groups, each of said tow groups having one or more tows wherein a portion of said tow groups contain two or more tows. The flow of resin along within the fabric is ensured by arranging spacing between tows in a tow group to be less than the spacing between adjacent tow groups. Thus the spacing between adjacent tow groups forms the required flow channels. The flow channels permit resin to flow quickly through the fabric, especially in the direction of the tows.

As the starting point of the further development of optimal reinforcement was that as there should not be any yarns/fibers stretching crosswise over the channel structure for giving the material stability in transversal direction, it is very difficult to handle the material during the subsequent work phases. The often heavy reinforcements are laid in the moulds, for instance during the wind turbine blade production phases, often several, sometimes even 50 - 60 layers one on top of another, the reinforcements having a length of several meters, often up to 50 - 60 meters, sometimes even more. The transverse stability is needed so that the operator stacking the reinforcements in the mold in the blade production is able to adjust the exact position of each reinforcement in transverse direction. This is not possible without sufficient transversal pulling strength. If the flow channels extend continuously from one end of reinforcement to the opposite end thereof, like the EP-B1-1667838 teaches, the channels form weak lines along which the reinforcement is easily torn into two or more parts, i.e. into longitudinal stripes.

In other words, the flow channels extending over the entire length of the reinforcement form a clear problem. After reinforcement is torn into such parts it is very hard to position the parts in the mold such that the distance between the parts corresponds exactly to the width of the flow channel. However, if such is not done the strength properties of the end product change dramatically immediately. Thus, the tendency of the reinforcement to be torn into pieces increases either the workload due to extreme care that has be taken when positioning the reinforcement in the mold or the waste material when each torn reinforcement has to be rejected.

Further, the use of continuous longitudinal flow channels either require the use of mechanical stitching or chemical bonding e.g. by thermoplastic binder for anchoring the rovings to stay together in transverse direction. However, a reinforcement comprising a single layer of rovings may only be manufactured by means of stitching to have a required transverse stability and even then the stability is limited. With regard to stitching the stitching yarns go only lengthwise in warp knitting technique. Using certain stitch patterns like tricot or atlas some sideways stability may be reached. Another possibility could be to turn the warp knitted reinforcement 90 degrees placing thus the stitches crosswise. This is not practical as the typical widths of warp knitting machines are 50 - 100 - 130 inches. In case of a wind turbine blade 50 meter long and 40 layers thick, typically 800 - 1000 separate pieces should be placed in the mould manually with high accuracy which is not in the least practical. This however reduces the usable width of channels and also causes additional curvature for the reinforcing rovings with reduced mechanical properties. Thus stitching does not provide an efficient and practical solution to increase the sideways stability of channel concept in predominantly long laminate construction of unidirectional reinforcements. In connection with a multilayer reinforcement bonding by means of thermoplastic binder may also be utilized, whereby, when using such bonding, the reinforcement cannot have continuous gaps or flow channels between adjacent rovings in all its layers, i.e. in Z- direction such that they form a continuous longitudinal flow channel through the reinforcement. Thus the flow channel has to be provided in at least one layer and the bonding in at least another layer. However, positioning a bonded layer on a layer having the flow channels means, in practice, that the bonded layer prevents the resin from entering the flow channel from any other direction except for the end of the flow channel. Thus the introduction of resin has to take place via the ends of the channels, which means that when producing elongated products, for instance, wind turbine blades having a length of tens of meters the flow of resin from one end of the blade to another takes a long time. In order to be able to feed the resin all the way from one end of a lengthy object to the opposite end thereof through the extremely narrow flow channels the requirements set for the resin properties like viscosity and temperature etc. are very high.

Thus the practice has shown that the present day solutions have several problem areas, like for instance:
- the reinforcements do not have acceptable permeability, or
- if the permeability is improved by flow channels of the prior art teachings for the resin, the reinforcement loses its transverse stability,
- stitching is required for a single layer reinforcement,
- stitching creates kinks in the rovings resulting in risk of micro cracks, and
- chemical bonding with binder requires two or more layers.

### Definitions

The following illustrative explanations are provided to facilitate understanding of certain terms used frequently in the specification and claims discussing the present invention. The explanations are provided as a convenience and are not meant to limit the invention.

Areal weight - Weight (mass) per unit area of a single ply of dry reinforcement fabric.

Binder - A polymer material in various forms like powder, film or liquid. The binders may be made of one or several individual binders having different characteristics in chemical or physical properties like stiffness, melting point, polymeric structure, Tg etc. Binder is used to fix together the fiber structure to form a web and finally the reinforcement. Suitable binders are thermoplastic epoxies, co-polyesters, bisphenolic unsaturated polyesters, or their mixtures, just to name a few examples.

Laminate - A material that can be constructed by impregnating one or more layers of reinforcement using appropriate resin and let it harden either by chemical reaction or cooling down of temperature. The laminate is a fiber reinforced structure made of a matrix reinforced by fine fibers of for instance glass, carbon, aramid etc. The matrix may be epoxy, a thermosetting plastic (most often polyester or vinylester) or a thermoplastic. Common end uses of glass fiber reinforcements include boats, automobile parts, wind turbine blades, etc.

Matrix - material that binds together the reinforcements to form a composite. Composites use specially formulated polymers, like thermosetting epoxy, vinylester or unsaturated polyester resin, and phenol formaldehyde resins or a thermoplastic resin (see 'Polymer') just to mention a few examples.

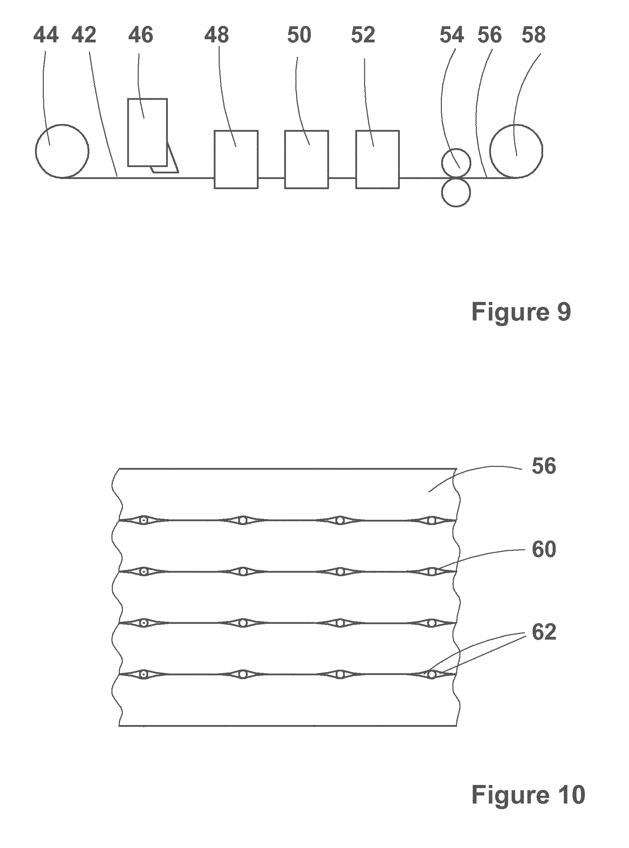

Monofilament - A yarn composed of a single continuous filament typically made of synthetic material, such as polyamide (nylon), polyethylene terephthalate, polypropylene, polybutylene terephthalate etc. In broader sense, the word monofilament, irrespective of the material, covers all such structures that create between the reinforcing fiber layers flow channels discussed in connection with Figure 10.

Polymer - Generally includes, for example, homoplymers, copolymers, such as for example, block, graft, random and alternating copolymers, terpolymers, etc, and blends and modifications thereof. Furthermore, unless otherwise specifically limited, the term "polymer" includes all possible geometrical configurations of the material. These configurations include, for example, isotactic, syndiotactic and random symmetries.

Reinforcement - a web comprising of reinforcing fibers, the fibers being anchored to one another by appropriate means. Often manufactured as continuous webs. There are several ways to manufacture the reinforcement in unidirectional or multi-axial orientations, e.g. through the textile processing techniques of weaving, knitting, braiding and stitching or by bonding with an appropriate binder.

Reinforcing fibers - fibers used together with a matrix in the manufacture of composite materials. The fibres are usually man-made fibers like glass (including all its variants), carbon (with all its variants), or aramid, which may be used as both continuous filaments and non-continuous fibers. Also wide range of natural fibres such as sisal, flax, jute, cocos or asbestos, just to name a few, have been used.

Resin Transfer Molding (RTM) - A process having two mould surfaces by which a resin is pumped typically at low viscosities and low pressures into a closed mold die set containing often a preform of dry fabric, that is, to infuse resin into the preform and to make a fiber-reinforced composite part.

Roving - a long and narrow untwisted bundle of continuous fibres or filaments, particularly glass fibres. In this application synonym to tow, whereby the selection of fibres not only contain glass fibres but also carbon and aramid fibres, more generally man-made continuous fibres.

Roving group or tow group - one or more tows or rovings that are closely spaced.

Tex number - An Sl-unit of measure for the linear mass density of yarns and is defined as the mass in grams per 1000 meters. Tex is more likely to be used in Canada and Continental Europe, while denier remains more common in the United States and United Kingdom. The unit code is "tex". The most commonly used unit in connection with man-made synthetic fibers is actually the decitex, abbreviated dtex, which is the mass in grams per 10,000 meters.

Thermoplastic - A polymer that is fusible, softening when exposed to heat and returning generally to its unsoftened state when cooled to room temperature. Thermoplastic materials include, for example, polyvinyl chlorides, some polyesters, polyamides, polyfluorocarbons, polyolefins, some polyurethanes, polystyrenes, polyvinyl alcohol, caprolactams, copolymers of ethylene and at least one vinyl monomer (e.g., poly (ethylene vinyl acetates), cellulose esters and acrylic resins.

Tow - In the composites industry, a tow is an untwisted bundle of continuous filaments, and it refers to man-made fibres, particularly carbon fibres (also called graphite). Tows are designated by the number of fibers they contain, e.g., a 12K tow contains about 12,000 fibres. Here synonym to roving.

Transverse handling stability - A force that prevents a unidirectional reinforcement from being torn into pieces. Needed when positioning a reinforcement in a mold on top of another reinforcement and moving the reinforcement in a direction transverse to its longitudinal direction.

Unidirectional (UD) reinforcement - Reinforcement in which all of the rovings or tows run in the same direction, in this case in longitudinal direction. These rovings are often in prior art UD reinforcements bound by means of stitching and typically some additional light layer of chopped strands or continuous multifilament yarns to hold the rovings together and to prevent their tearing into bundle formation. Another way of binding the rovings or tows together is the use of a binder, for instance a thermoplastic binder. Also in that case above mentioned additional stabilizing layers may be used.

Vacuum Infusion - A process using a one-sided mould that shapes the end product. On the lower side is a rigid mould and on the upper side is a flexible membrane or vacuum bag. When vacuum/suction is applied to the mould cavity air escapes from the cavity, whereafter resin is allowed to be infused by the suction or additionally assisted by small overpressure at the feed side to completely wet-out the reinforcements and eliminate all air voids in the laminate structure.

Yarn - A long continuous length of interlocked, often twisted, individual fibers, suitable for use in the production of textiles, sewing, crocheting, knitting, weaving, stitching, embroidery and ropemaking. Yarn may be made from any number of natural or synthetic fibers.

Z- direction - The direction perpendicular to the plane of the layer or the stack of layers, i.e. thickness direction.

### Brief summary of the Invention

An object of the present invention is to offer a solution to at least one of the above discussed problems.

Another object of the present invention is to develop a novel unidirectional reinforcement having good permeability to resin.

A further object of the present invention is to develop a novel unidirectional reinforcement having good permeability to resin in a direction transverse to the reinforcing filament orientation.

A still further object of the present invention is to improve the handling properties of a non-stitched reinforcement and still offer sufficient strength and stability of such a reinforcement in transverse direction.

A yet further object of the present invention is to speed up the production of unidirectional reinforcements.

A yet further object of the present invention is to simplify the production of unidirectional reinforcements.

A yet further object of the present invention is to ensure that the filaments in a unidirectional reinforcement maintain their straight shape.

A yet further object of the present invention is to avoid the use of transverse reinforcement fibers/rovings.

The required permeability to resin, transverse strength and stability of the reinforcement of the present invention are ensured in accordance with a first preferred embodiment of the present invention by arranging flow channels for resin in such a way that each channel is essentially non-continuous, i.e. there is a defined length of channel which is first open, then closed and again opened. By means of this arrangement continuous weak lines extending over the entire length of the reinforcement are avoided.

The permeability is retained in accordance with a first preferred embodiment of the present invention by adding between the reinforcing rovings small openings or sets of channels in such a way that the openings retain their shape even when the various layers are compressed together by the pressure of vacuum process. The resin to be infused will flow through the numerous openings arranged 3-dimensionally in such a way that resin front may proceed as well through the thickness, in fiber direction as well as transverse to fibers.

The openings or channels are arranged in such a way that their relative position is continuously changed, during the reinforcement manufacture, to avoid the chance of openings in two or more reinforcement layers from being positioned one directly above another, whereby the resin is forced to move sideways when flowing from one channel to another. Moreover the openings or channels are kept so small that there is no distortion in fiber arrangement and fiber mechanical properties.

The required permeability to resin, transverse strength and stability of the reinforcement of the present invention are ensured in accordance with a second preferred embodiment of the present invention by using transversally oriented monofilaments or corresponding means in connection with the unidirectional reinforcing rovings for arranging free flow area in a direction transverse to the direction of the unidirectional rovings for the resin to impregnate the product efficiently.

At least one of the prior art problems is solved and at least one of the objects achieved by means of a unidirectional reinforcement for the manufacture of fiber reinforced composites, the unidirectional reinforcement comprising continuous unidirectional rovings bonded to each other, the reinforcement having a top surface and a bottom surface and being provided with means for facilitating the impregnation of the reinforcement with resin, the impregnation facilitating means are uniform transverse flow channels extending from one edge of the unidirectional reinforcement to the opposite edge thereof, the transverse flow channels being formed by means of monofilaments arranged transverse to the unidirectional rovings.

In a similar manner at least one of the prior art problems is solved and at least one of the objects achieved by means of a method of producing a unidirectional reinforcement for fiber reinforced composites comprising the steps of:
a) laying continuous rovings unidirectionally side by side for forming a web,
b) laying monofilaments in a direction transverse to the direction of the unidirectional rovings on the continuous rovings,
c) bonding the monofilaments on the continuous rovings.

Other characteristic features of the reinforcement of the present invention and the method of its manufacture are disclosed in the appended patent claims.

With the present invention at least some of the following advantages may be reached
- the stitches are replaced by means of a binder system whereby harmful bends caused by stitches are avoided, whereby
   - the strength properties of the reinforcement are improved, as the fibers remain straight
   - the production speed is not limited by stitching
- the permeability of unidirectional reinforcements is improved to such a level that facilitates good resin flow,
- possibility to produce reinforcements formed of rovings in a single layer without stitching, and
- no need to use transverse reinforcing fibers for achieving sufficient transverse stability.

### Brief Description of Drawing

In the following, the unidirectional reinforcement of the present invention and the method of its production are discussed in more detail with reference to the appended figures, in which
Figure 1 illustrates schematically the production process of the unidirectional reinforcement in accordance with a first preferred embodiment of the present invention,
Figure 2 illustrates a top view of an exemplary device used for providing the reinforcement with the resin flow channels in accordance with a preferred embodiment of the present invention,
Figure 3 illustrates a top view from inside of an exemplary device used for providing the reinforcement with the resin flow channels in accordance with a preferred embodiment of the present invention,
Figure 4 illustrates a side view of an exemplary device used for providing the reinforcement with the resin flow channel in accordance with a preferred embodiment of the present invention,
Figure 5 illustrates a way of providing the reinforcement with flow channels in accordance with a further preferred embodiment of the present invention,
Figure 6 illustrates a top view of a reinforcement in accordance with a further preferred embodiment of the present invention,
Figure 7 illustrates another way of providing the unidirectional reinforcement comprising several layers of rovings with non-continuous flow channels,
Figure 8 illustrates a top view of another reinforcement in accordance with a further preferred embodiment of the present invention,
Figure 9 illustrates schematically the production process of the unidirectional reinforcement in accordance with a second preferred embodiment of the present invention, and
Figure 10 illustrates a schematical side view of the unidirectional reinforcement in accordance with a second preferred embodiment of the present invention.

### Detailed Description of Drawings

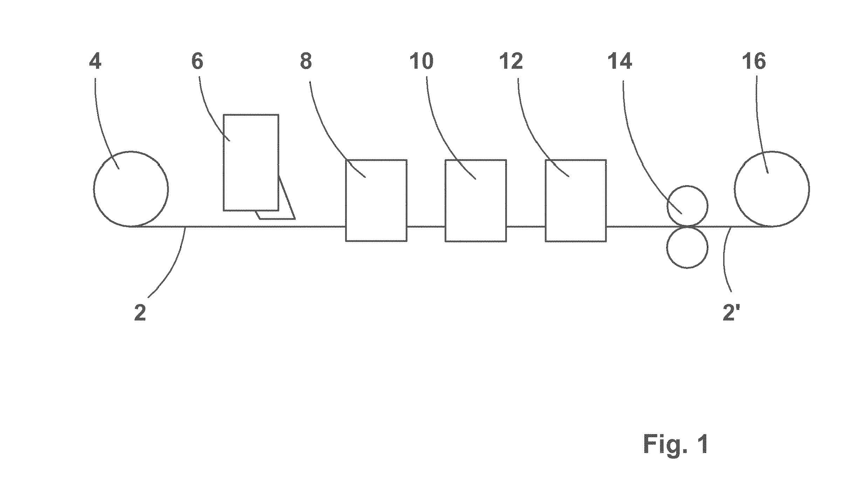

Figure 1 illustrates schematically the production process of the unidirectional reinforcement in accordance with a first preferred embodiment of the present invention. The manufacture of a unidirectional reinforcement proceeds as follows. First a uniform web 2 of unidirectional glass fiber rovings or carbon fiber tows is formed by pulling them from the packages 4 and arranging them side by side or in a controlled distance from each other. From now on the word "rovings" is used to refer to all such tows, rovings etc. that are used in the manufacture of unidirectional reinforcements. Thus the rovings are arranged side by side preferably in one, but possibly also in several layers. The web 2 is then directed to a binder application station 6. The binder may be applied by several methods, each such method belonging to the scope of the present invention. In an exemplary system the binder is a thermoplastic binder in powder form and is added on the web by a typical scattering method. Thereafter the web 2 is taken to a device 8 used for spreading the binder powder on all surfaces of the web, i.e. not only on top of the web but all around the individual rovings. The goal is to effectively surround the rovings by a thin but uniform layer of powder binder material. The operation of the device 8 may, for instance, be based on vibrating the web and the powder originally thereon assisted possibly with circulating air. By the use of the binder spreading device 8 the pulverous binder is prevented from staying only on the upper surfaces of the rovings as would be the case with the mere scattering method. For instance, binder is needed also on the underside of the rovings to avoid the hanging of some otherwise loose rovings. It should, however, be understood that binders in liquid form may also be used. In such a case the binder is applied by means of spraying, extrusion (hot-melt nozzles), centrifugal spraying, etc. just to mention a few options.

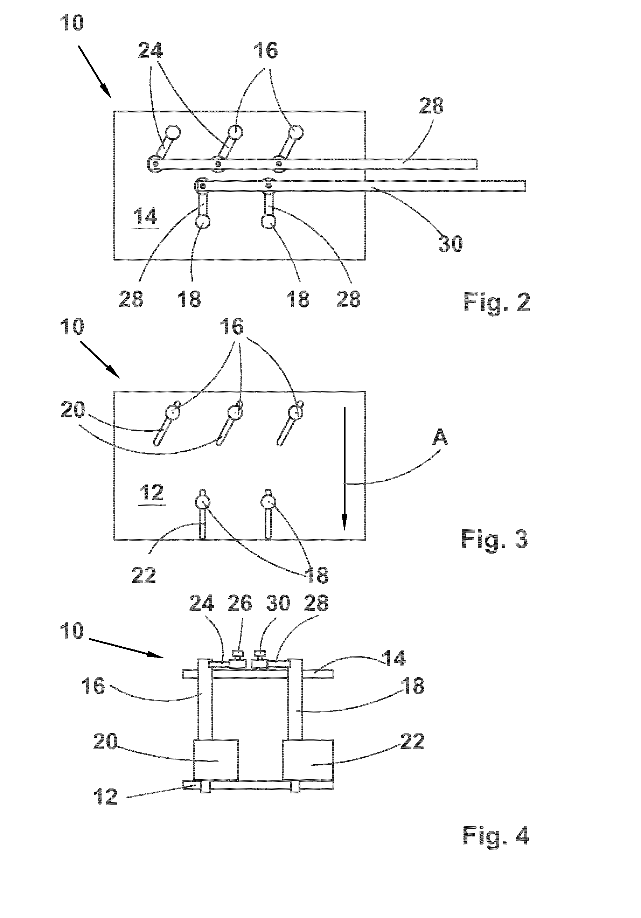

After the powder is spread or distributed in the web 2 the web is taken to a device 10 for making non-continuous flow channels of the present invention for the resin in the reinforcement. Figures 2 - 5 discuss in more detail exemplary devices and methods used for making the non-continuous flow channels as well as the type of the resulting reinforcement and its functional properties. Next the web having the non-continuous flow channels is taken to a device 12 used for melting the thermoplastic binder to bond the rovings together. Sometimes, depending on the binder system, the melting is not required whereby the web may be taken to the following process step. Thereafter the web is taken in at least one nip 14 between two rolls for compressing the web in order to improve the bonding of the rovings by the molten binder and to form a unidirectional reinforcement 2' having a desired thickness. After the nip 14 the unidirectional reinforcement 2' is rolled 16 for delivery to a customer. By means of arranging the flow channels as non-continuous the above described bonding ensures that the reinforcement 2' gets sufficient transversal stability without the need of specifically placing any fibers (stitching yarns or other fibers) transversally.

A further optional method step of heating and pressing the unidirectional web may be arranged after the spreading of the binder at 8 and before the formation of the flow channels at 10. By performing this step it is ensured that the web has sufficient transversal stability when entering the step of cutting the flow channels at 10. Also in this case, the web is after formation of the flow channels heated at 12 and taken into a nip 14 for finalizing the reinforcement 2'.

Figures 2 - 4 discuss an exemplary device 10 for providing the reinforcement with non-continuous flow channels for resin. In accordance with a preferred embodiment of the present invention the device 10 has a bottom plate 12 along which the web travels in the direction of arrow A. The device has also a top plate 14 at a distance above the bottom plate 12. A number of pins 16 and 18 are arranged to run through openings in the top plate 14 down to openings in the bottom plate 12. The parts of the pins 16 and 18 left between the top and the bottom plates are provided with blades 20 and 22, which, when in use, divide the web locally. The upper ends of the pins 16 above the top plate 14 are provided with arms 24, which are at their ends distal from the pins 16 attached rotatably to connection or operating arms 26. In a corresponding manner, the upper ends of the pins 18 above the top plate 14 are provided with arms 28, which are at their ends distal from the pins 18 attached rotatably to connection or operating arms 30. Thus, the operating arms 26 are used to turn blades 20 and operating arms 30 to turn blades 22 as one unitary group. Here the pins 16 and blades 20 as well as pins 18 and blades 22 have been shown as separate parts attached together, but, depending, for instance, on the material they are made of, the pins may be formed oval in shape or even more longitudinal such that the pins itself forms the blades.

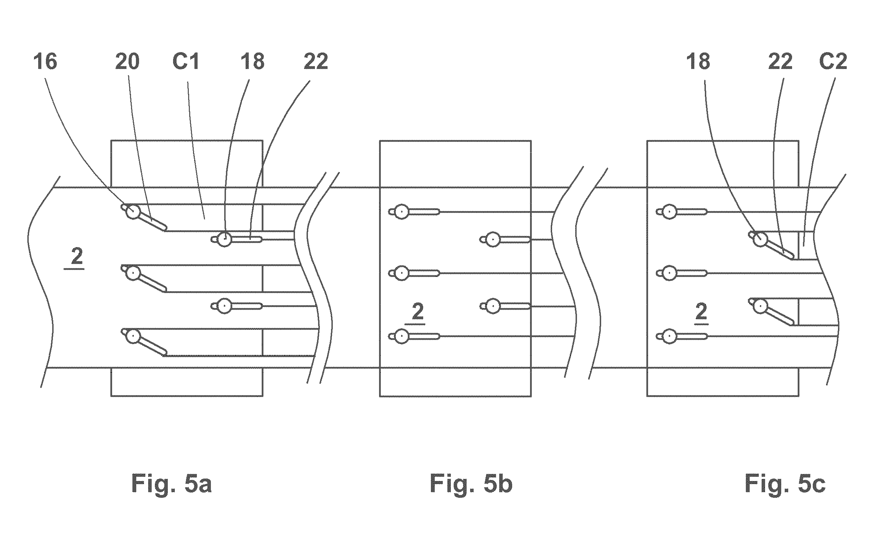

In the exemplary embodiment shown in Figures 2 - 4 the device 10 is able to make two sets of flow channels, one set (by means of blades 20) comprising three channels and the other set (by means of blades 22) two channels. The blades 20 and 22 of this embodiment are immobile in vertical direction, whereby they always cut the web when the web runs over the bottom plate 12. In other words, in the shown embodiment the web is always cut in six stripes. First when the web enters on the bottom plate 12 the blades 20 cut the web in four stripes, i.e. two stripes between the blades 20 and two outside the blades 20. Thereafter the web advances to the area of blades 22, which cut the two centermost stripes into four narrower stripes. However, as the blades are as thin as the knife material allows, the cut between the stripes is almost invisible. Thus, for providing the web with longitudinal flow channels for resin the blades 20 and 22 are arranged rotatable. The blades 20 are connected by means of pins 16 and arms 24 to an operating arm 26, and blades 22 by means of pins 18 and arms 28 to an operating arm 30. Thus by moving operating arm 28 in its longitudinal direction to the position shown in Figure 2, the blades 20 are turned such that they push a group of rovings of the web to the side and open three flow channels in the web (see Figure 5a). As shown in Figure 2 the pins are arranged in two or more groups thus facilitating one group (here pins 18) to be turned so that the blades (here 22) are parallel to the fibres not creating a channel and the second group (here pins 16) is turned such a way as to create a channel. The pins are centrally controlled to alternate between the positions for making a channel and not making a channel.

Figures 5a through 5c show the operation of the device 10 in three consecutive stages. In Figure 5a, the blades 20 are turned (as shown in Figure 2) such that they open channels C1 whereas the blades 22 are parallel with the rovings, and just make a narrow cut (shown by a solid line) in the web 2. In Figure 5b the pins 16 are turned such that the blades 20 are parallel with the fibers, whereby there is no channel after the blades 20 either. In Figure 5c the pins 18 are turned such that the blades 22 form channels C2 in the web 2. Already at this stage, it should be understood that the Figures 2 - 6 have not been drafted in scale, i.e. the width of the open channel in relation to the width of the closed area between the channels (or the blades forming the channel) is not shown in scale. As an example, the distance between adjacent flow channels may be of the order of 15 - 25 mm, and the width of the channels formed of the order of 2 mm. However, the dimensions used in the actual product may vary largely depending on the diameter of the rovings, the thickness of the reinforcement 2' etc.

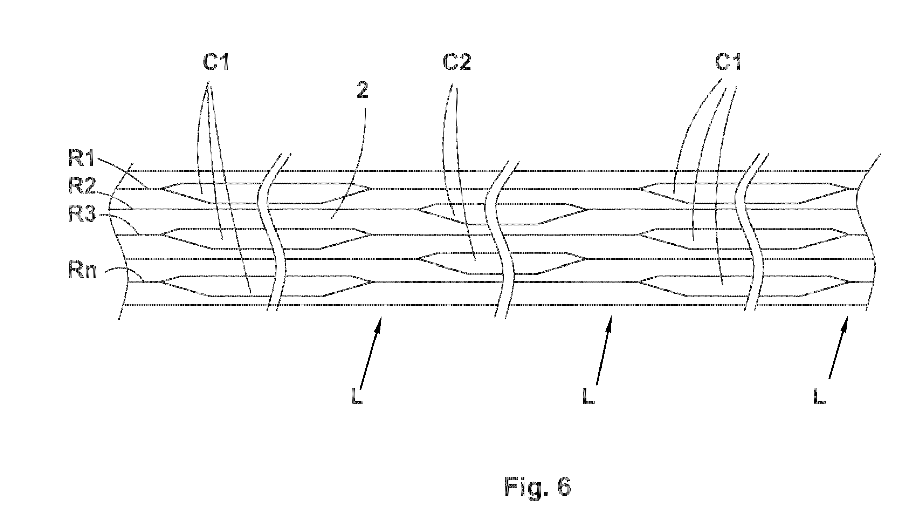

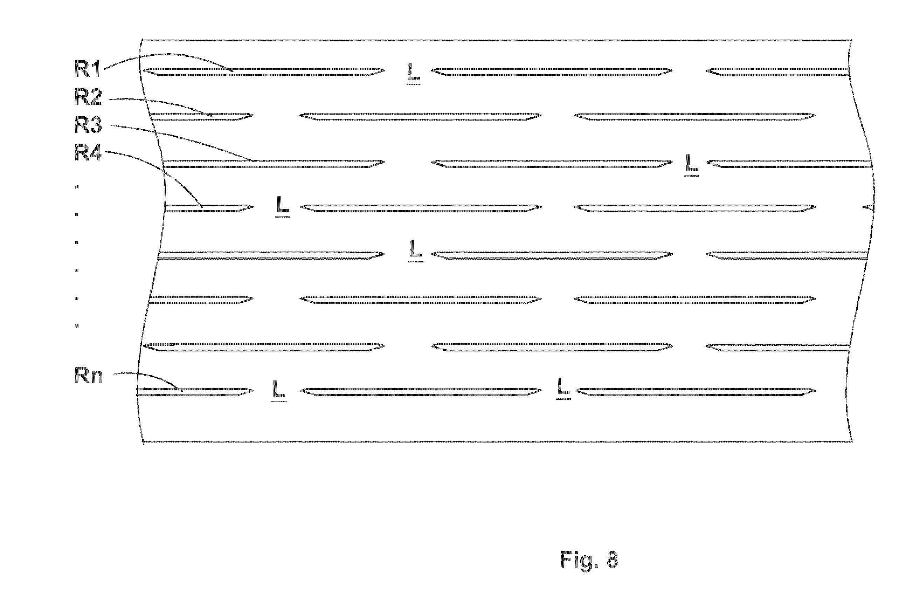

Figure 6 illustrates the web after the device 10 has been performed its task i.e. provided the web 2 with the sets of flow channels C1 and C2. In other words, the device 10 is operated such that the blades 20 (see Figure 5a) open a set of channels C1 in the web 2. After the channels C1 have a desired length, for instance 200 - 300 mm, the blades 20 are turned parallel with the rovings (see Figure 5b). After a desired period of time, or rather after a land area L of desired length is formed, blades 22 are turned to open a set of channels C2 in the web (see Figure 5c). Then after the set of channels C2 have a desired length, for instance 300 mm, the blades 22 are turned back to form another land area L of desired length. Thereafter, the blades 20 are turned and the above sequence is repeated. The resulting web 2 differs from corresponding prior art reinforcements in that the web 2 of the present invention has rows R1, R2, R3,... Rn parallel with the rovings, each row comprising a sequence of non-continuous flow channels, C1 or C2, and land areas L therebetween, whereas the prior art suggests the use of continuous flow channels. In the embodiment of Figure 6 the flow channels C1/C2 are arranged side by side such that the land areas L left in each row R1, R2, R3,... Rn between the flow channels C1/C2 form a closed combined land area running at right angles to the longitudinal direction of the web 2. In other words, it could be said that the land areas L of each row have been arranged such that land areas of a row R2 at least partially overlap the land areas L of the adjacent rows R1 and R3. Later on Figure 8 will discuss another option for the arrangement of the flow channels.

Thus Figure 6 shows the unidirectional web of the present invention immediately after the device providing the web 2 with the sets of flow channels C1 and C2. After the formation of the flow channels the web is taken to the bonding station where the thermoplastic binder is molten and the form of the flow channels is then fixed with the binder. This prevents the flow channels from being closed during the subsequent compressing step and in the later molding step where a stack of reinforcements are compressed due to applied vacuum pressure of the vacuum infusion method or mold closing pressure of the RTM method.

After the powder binder melting step the reinforcement is taken to the nip compressing the reinforcement such that the rovings are pressed tight together such that the molten binder is able to bond effectively the rovings. While the reinforcement is compressed the cuts formed by the blades parallel with the rovings are pressed together in such manner that the cuts are not any more visible after the compression as the binder when binding rovings, fills narrow cuts. As a result of the bonding step the reinforcement of the present invention has sufficient transverse stability all over its length thanks to the non-continuous flow channels.

Referring to Figures 2 - 6 it should be understood that that the number of sets of blades, i.e. a number of operating arms 28, 30 in the device forming the flow channels is at least 2. However, the number of sets of blades may as well be 5, 10 or 15 or even more. It just depends on how many different transverse positions the flow channels are desired or needed in. Also, the operating arms 28, 30 need not be necessarily at right angles to the travel direction A of the web 2, but they may be inclined, too. When the operating arms are inclined, the arrangement results in a web or reinforcement where the flow channels are not exactly side by side but more or less overlapping the land areas. This may even be a preferred way of arranging the flow channels, as then the distance for the resin to travel from a flow channel to fill void volumes within a land area next to it is reduced. Also it should be understood that the operating arms may be replaced with a rack and pinion drive where the pinions are arranged on the pins, and pushing or pulling the rack turns all pins simultaneously. And further, each pin may also be provided with a turning motor of its own operating the pin independently. Also, each pin of a set of blades may be provided with a sprocket so that a chain driven by an electric motor turns simultaneously all the respective pins.

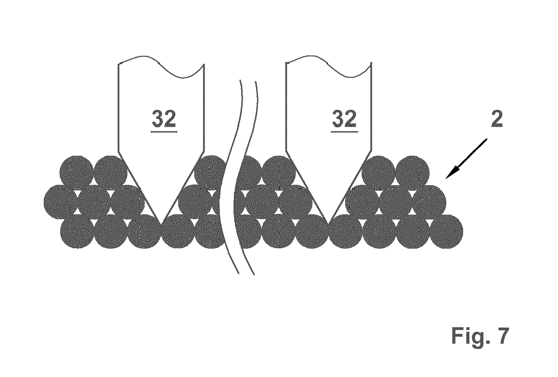

The flow channels ensuring the flow of resin within the reinforcements may be produced in other ways, too. In accordance with a second optional embodiment of the present invention, a number of preferably conical 3 - 5 mm diameter objects 32, or blade-like objects are arranged to penetrate the web 2 from above, or from below, for forming longitudinal flow channels as the web is advancing. After a predetermined time, i.e. channel length, the conical objects are lifted off the web, moved sideways and lowered to a new position for starting the formation of a new set of flow channels. Thus this kind of a device may be used to form all the required flow channels with the same conical or other objects. As to the channel-forming objects 32 it should be understood that, as shown in Figure 7, the objects 32 may penetrate to a desired depth in the web 2, the depth being less than the thickness of the web, or entirely through the web. This feature relating to the depth of the cuts made by the channel-forming objects may also be applied to the blade type objects discussed in connection with Figures 2 - 6.

In accordance with a second optional embodiment of the present invention the flow channels may be formed by injecting pressurized fluid (gas or liquid) through a series of nozzles each one forming a flow channel similar to the above discussed options. The device for forming the flow channels is provided in this embodiment with a bank of nozzles such that the pattern of the flow channels may be controlled by operating the nozzles trough magnetic valves. The bank may be provided with as many nozzles as there are transverse locations or rows for flow channels in the reinforcement, or the bank may be provided with as many nozzles as there are simultaneously open flow channels in the transverse direction of the reinforcement. In other words, in the former alternative the bank is fixed, and in the latter alternative the bank may be moved to move the nozzles transverse to the web.

Figure 8 illustrates as already briefly mentioned above another option for arranging the flow channels or rows of flow channels in the reinforcement. Here, there are two sets of rows, i.e. rows having an odd number R1, R3, R5, ... and rows having an even number R2, R4,.... In this embodiment the flow channels in the rows having an odd number are exactly side by side, i.e. the flow channels do not overlap the land areas L, and the land areas L do not overlap the flow channels. The same applies to the flow channels and land areas of the rows having an even number. However, the rows have been arranged stepwise such that the flow channels of rows having an odd number overlap the land areas of the rows having an even number, and vice versa. To be more specific, in Figure 8, the transverse centerline of a flow channel unites with the transverse centerline of a land area in the adjacent row of flow channels and land areas.

Thus, in more general terms, the flow channels of a row R2 overlap at least partially the land areas of adjacent rows R1 and R3. In other words, it is also within the scope of the present invention that there are more than two different rows of flow channels and land areas arranged stepwise. One option is to arrange the transverse centerline of a land area meet a transverse line arranged halfway between the transverse centerline of a flow channel and an end thereof.

This far it has been assumed that the length of the flow channels in each row of a reinforcement is the same. However, it is also possible to vary the length of the flow channels, or that of the land areas, too. Thus the only necessary feature of the invention is that the flow channels in each row are non-continuous and optimized for flow.

When using the reinforcement of the present invention, the resin is able to flow through its flow channels in one- or two-dimensionally. That is, both in the plane of the reinforcement and in a direction transverse thereto. It has been observed in the performed tests that by arranging the resin flow channels as non-continuous, the transverse stability of the reinforcement achieved by the use of a binder has been increased to such a level that the reinforcement layer may be positioned in the mold easily and moved in sideways direction without a risk of tearing the layer in parts. Thus the need for stitching the reinforcement for achieving sufficient transverse stability has been avoided. Simultaneously it has been observed that the permeability to resin is not sacrificed too much by the land areas arranged between the flow channels.

Finally it should be understood that the length of each flow channel and land area and the width of the flow channel as well as their transverse distance from each other may be adjusted according to the individual needs of each case to control the infusion process like resin flow speed, wet-out time and sideways pulling strength (transverse stability) to give an example. Other factors include resin viscosity and temperatures of the molds and lamination room. Also the binder content and type of the new reinforcement is to be considered while adjusting the parameters.

The material is ideally suited for vacuum infusion method, e.g. for the production of spar cap laminates in wind generator blades. This is a weight critical application where good mechanical properties, especially fatigue properties, give most benefit and are most welcome. Yet there are also other applications areas with similar requirements, which benefit of the concepts of the present invention, i.e. both the above discussed non-continuous resin flow channels and the transverse flow channels discussed in the following.

Another way of improving the penetration of resin inside and between the rovings forming the unidirectional reinforcements will be discussed in the following. The unidirectional reinforcements in accordance with the second preferred embodiment of the present invention are basically manufactured as discussed in connection with Figure 1 except that the steps relating to forming of the non-continuous channels have, preferably but not necessarily, been omitted. In other words, Figure 9 illustrates schematically the production process of the unidirectional reinforcement in accordance with the second preferred embodiment of the present invention. The manufacture of a unidirectional reinforcement proceeds as follows. First a uniform web 42 of unidirectional rovings (preferably but not necessarily glass fiber) or carbon fiber tows is formed by pulling them from the packages 44 and arranging them side by side or in a controlled distance from each other depending on the targeted areal weight. From now on the word "rovings" is used to refer to all such tows, rovings etc. that are used in the manufacture of unidirectional reinforcements. Thus the rovings are arranged side by side preferably in one layer of rovings, but possibly also in several layers of rovings. The web 42 is then directed to a binder application station 46. The binder may be applied by several methods, each such method belonging to the scope of the present invention. In an exemplary system the binder is a thermoplastic binder in powder form and is added on the web by a typical scattering method. Thereafter the web 42 is taken to a device 48 used for spreading the binder powder on all surfaces of the web, i.e. not only on the top surface of the web but all around the individual rovings. The goal is to effectively surround the rovings by a thin but uniform layer of powder binder material. The operation of the device 48 may, for instance, be based on vibrating the web and the powder originally thereon assisted possibly by circulating air. By the use of the binder spreading device 48 the pulverous binder is prevented from staying only on the upper surfaces of the rovings, or on the top surface of the web, as would be the case with the mere scattering method. For instance, binder is needed also on the underside of the rovings, i.e. on the bottom surface of the web, to avoid the hanging of some otherwise loose rovings or filaments. The amount of binder has to be considered very carefully, as, in the case of unidirectional reinforcements it is the binder that provides the reinforcement with all the transverse stability it has. However, as already discussed earlier it is a question of optimizing here. The more binder is applied the better the transverse stability of the reinforcement is. But, simultaneously, the more binder is applied the more rigid the reinforcement is and the harder it is to make the reinforcement follow the contours of the mould. Thus, the amount of binder should be kept as small as possible, just to give enough transverse stability. Additionally, the amount of binder should be kept minimal to avoid any compatibility issues with the matrix. Therefore, the reinforcement of the present invention uses 5 - 30 g/m², preferably about 8 - 15 g/m² binder per reinforcement having an areal weight of 1000 - 1200 g/m². Naturally, if the areal weight is smaller also the amount of binder is lower, and vice versa. It should, however, be understood that binders in liquid form may also be used. In such a case the binder is applied by means of spraying, extrusion (hot-melt nozzles), centrifugal spraying, etc. just to mention a few options.

After the powder is spread or distributed all over the web 42 the web is taken to a device 50 introducing or laying monofilaments on the web transverse to the travel direction of the web. Here the word 'transverse' has to be understood broadly, as the direction of the monofilaments may range between ±60 degrees from the direction at right angles to the rovings of the unidirectional web, i.e. the direction of the monofilaments deviates at least ±30 from the direction of the unidirectional rovings of the web. The monofilaments may be arranged on the web at '50' by using a tool that travels transversely back and forth above the web laying a certain number of monofilaments on the web at a time. Another possible way of laying the monofilaments is to arrange a rotating wheel at '50' in a plane substantially at right angles to the web round the web, whereby the wheel winds the monofilaments round the web. By using the rotating wheel the monofilaments are arranged on both the top and the bottom surfaces of the web. An essential feature of the present invention is that the monofilaments are laid on the web in straight, parallel formation, i.e. the monofilaments run linearly and uniformly from one edge of the web to the opposite edge thereof, in other words the monofilaments, for instance, do not form loops found typically in knitting patterns. Essentially straight formation of monofilaments across the unidirectional reinforcing rovings ensure shortest resin flow time between the reinforcement edges as straight line is the shortest way between two points.

Next the web having the monofilaments on its surface/s is taken to a heating device 52 (known per se), used for melting the thermoplastic binder to bond both the rovings together and the monofilaments on the rovings. Thereafter the web 42 is taken to a compression stage where the thickness of the reinforcement is adjusted. The compression stage 54 is performed, for instance, in at least one nip between two rolls for compressing the web in order to improve the bonding of the rovings by the molten binder and to form a unidirectional reinforcement 56 having a desired thickness. After compression at '54' the unidirectional reinforcement 56 is rolled 58 for delivery to a customer. Sometimes the reinforcement is cut to a desired width before the delivery by means of a slitter winder.

Here, it should be understood that the above heating and monofilament laying steps may be performed also in opposite order, i.e. the heating step first to melt the binder, and the monofilament laying step thereafter. In this latter option the type of monofilament may, for instance, be of such material that is not capable of withstanding the temperature of the melting step, but is introduced on the surface/s of the reinforcement while the molten binder is still in molten state (but not at as high a temperature as in the heating step), whereby the binder is able to bond the monofilaments, too. In fact, it should also be understood that it is often common practice to arrange cooling means after the heating and compressing steps to solidify the matrix material quickly.

With regard to the bonding of the monofilaments to the rovings of a unidirectional web there are a few more options. An alternative is to use a bicomponent monofilament, i.e. a monofilament coated by means of a layer of binder that, after the monofilament is laid on the rovings or between the layers of rovings, is melted such that the monofilaments are bonded to the rovings. Another alternative is to use stitches that are sometimes used for mechanically bonding the rovings together to bond the monofilaments, too. In other words, the unidirectional reinforcement of the present invention provided with monofilaments may be used in connection with both chemically (binder) and mechanically (stitching) bonded rovings. And further, it is also possible to use some other means of applying binder either on the rovings or on the monofilament while laying the monofilaments on the web.

The use of monofilaments may set new requirements to the nip/s, too. If the type of monofilament is easily compressible, either of material or of structural reasons, the nip pressure has to be considered, i.e. the monofilaments shall not lose their cross sectional shape in the nip, or in the least the shape may not change too much in view of the resin flow (see Fig. 10 for more details). The options are, naturally, not to use nip/s at all, to use soft-surfaced rolls or to lower the nip pressure.

As yet another option for the laying of the transverse monofilaments on the surface/s of the reinforcement another phase to arrange the monofilaments in connection with the reinforcement is when stacking the unidirectional reinforcement layers one on top of another in connection with filling the mould with the reinforcements.

The monofilaments 60 used between the reinforcement layers 56 for improving the permeability of the stack of reinforcements to resin in transverse direction create small channels 62 on both of their sides and between the reinforcing unidirectional fibers as shown schematically in Fig. 10. The monofilaments are preferably PA fibers that may have, for instance, a round, square or oval cross section or an X- cross section. In other words, as the monofilaments are manufactured from a suitable polymeric material by, for instance, extrusion, the cross section of the monofilaments may be, in practice, chosen freely for optimizing flow properties. In view of the present invention it is advantageous to use such a monofilament cross section that creates maximal geometrical cross section with given volume, while keeping the amount of non-reinforcing material in minimum. The infusing resin will flow through these channels crosswise to reinforcing rovings and then penetrate between the individual filaments and secure fast resin flow and good impregnation.

As to the shape and size of the monofilaments as well as their positioning on the reinforcement layers, i.e. their lateral distance from each other, all these features (among others) have to be considered carefully in view of proper impregnation and wet-out of the reinforcement stack with resin. The resin flow channels formed to the sides of the monofilament shall not be too open so that the resin has time to impregnate into the rovings and not to flow directly from the side of the stack of reinforcement where the resin is introduced to the opposite side of the reinforcement stack. Naturally, the shorter the distance is between adjacent monofilaments, the more open, i.e. larger cross-section, the transverse flow channels at the sides of the monofilaments may be, and vice versa. Another thing that has to be taken into account is the thickness of the reinforcement layer. The thicker the reinforcement layer is the more time it takes to properly wet-out the layer with resin. With the present invention it is possible to adjust the permeability of the reinforcement to make sure that the individual reinforcing fibers will be well impregnated and no dry areas or voids are left between the fibers.

In accordance with a specific example of the present invention the monofilaments are arranged between any two layers of rovings in a unidirectional reinforcement, i.e. not only on at least the top surface of the reinforcement, but between the layers of rovings, too.

lrrespective of the actual location of the monofilaments they are arranged at regular intervals, i.e. at about 3 to 50 mm, preferably 5 - 25 mm, more preferably at about 10 mm lateral distance from one another. The monofilament has a diameter of 10 - 1000 µm, preferably between 30 - 500 µm. In testing the present invention individual 170 dtex polyamide (PA) monofilaments having a diameter of 130 µm have been used.

The monofilament is normally used as a single filament, but in some cases, in accordance with a further preferred embodiment of the present invention, about 3 filaments, possibly up to 5 filaments twisted together may be used. However, irrespective of the diameter or detailed cross section or other structure of the transverse filament, the filament does not, in accordance with yet another preferred embodiment of the present invention, give any substantial transverse stability to the reinforcement, but in the case of a unidirectional reinforcement the stability is solely ensured by the use of appropriate thermoplastic binder. Such a binder has to match, i.e. be compatible, with the matrix material and to provide the bonded reinforcement with sufficient flexibility. The latter requirement means in practice, on the one hand, that the solidified binder has to be to some degree resilient, and, on the other hand, that the amount of the binder used has to be balanced between sufficient transverse stability and sufficient flexibility of the reinforcement. However, in accordance with a yet further preferred embodiment of the present invention, the monofilament may participate in ensuring the required transverse stability to the reinforcement together with an appropriate binder or even ensure the required transverse stability alone.

In accordance with a preferred embodiment of the present invention an ideal polymer material for monofilaments is such that it does not retard the curing or otherwise has no negative effect on the chemical or the mechanical properties of the resin, which forms the matrix. The polymer material used for the monofilaments should also have an elongation at break higher than that of the matrix. If the elongation at break of the monofilament is too low compared to resin, it may break in crosswise direction under longitudinal loading of the laminate and create small micro cracks as a result. Micro cracks may have adverse effects on the static and dynamic properties of the laminate, as they might serve as initiators for bigger cracks leading to visible damages in laminate structure and finally escalate to total part damage. Thus the elongation at break of the monofilament should be more than 6 %, preferably 10 - 20 %, the exact value depending on resin type used. l.e. the elongation at break of the monofilament is higher than that of the matrix. Another way of defining and comparing the material properties of the matrix and the monofilament is to talk about their moduli of elasticity. In other words, in order to work properly the modulus of elasticity of the monofilament should be clearly lower than that of the matrix material. Since the modulus of elasticity of the matrix material is about 3 GPa, the modulus of elasticity of the monofilament should be of the order of 2 GPa, or less.

The above discussed two ways of improving the permeability of a reinforcement stack to resin may be used one at a time, or as a combination of the two ways. In other words, in some applications the use of one of non-continuous channels, and transverse monofilaments may ensure sufficient permeability to resin. In some applications a combination of non-continuous channels and transverse monofilaments is required to ensure sufficient permeability to resin.

When combining the use of the transverse monofilaments with the non-continuous flow channels, the monofilaments (with the resin flow channels at the sides thereof) allow substantially free resin flow in a direction transverse to the direction of the unidirectional rovings, and the flow channels alongside between the rovings. This combination results in a reinforcement stack where the advancing of the impregnation front is very quick, as the transversely arranged monofilaments ensure that the resin reaches very quickly the opposite end or side of the reinforcement stack, and the flow channels between the rovings ensure that the resin advances quickly also in the longitudinal direction as well as in the Z- direction of the reinforcement.

With regard to the manufacture of the unidirectional reinforcement and placing the transverse monofilaments in connection therewith, it should be understood that the monofilaments may be positioned not only on the surface/s of the reinforcement but also between the layers of rovings the reinforcement is comprised of. In other words, if the reinforcement comprises four layers of rovings, the monofilaments may be positioned between each layer of rovings or between the second and third layer, i.e. to the center of the reinforcement. In practice, this means that the laying of unidirectional rovings for forming the web and laying the monofilaments have to be performed in such a sequence that, first, a layer, or layers, of unidirectional rovings are laid, thereafter a set of monofilaments, and thereafter the next layer/s of unidirectional rovings etc.

Another thing that has to be understood is that the above discussed use of transverse monofilaments for creating uniform transverse flow channels for resin used for impregnating a stack of reinforcements in a mold may not only be applied in connection with unidirectional reinforcements, but also in connection with all kinds of reinforcements including but not limited to multi-axial reinforcements, woven reinforcements, etc. Monofilaments may also be applied by conventional or modified carriages used in multi-axial machines. In this case monofilaments are bound under the normal stitches and the monofilaments may be parallel with the reinforcing fibers in 90 or ±45 degree orientation. Naturally also orientations other than the mentioned are possible.

The above mentioned application of the unidirectional reinforcement in the manufacture of spar cap laminates for wind turbine blades is just one of the innumerous positions where this kind of reinforcements are applied. The reinforcement of the present invention finds best use where there is a need for unidirectionally oriented reinforcement with best possible mechanical properties, especially fatigue but also static properties. However, it should be understood that the unidirectional reinforcement of the invention may be used in any application where fibre reinforced matrices are used.

The reinforcement of the present invention may be used with all kinds of infusion methods, including but not limited to Light RTM or RTM methods. Other lamination methods where resin impregnation is critical or otherwise retarded by tightly arranged fibers or other material present in the laminate structure like sandwich materials, fire retarding materials, fillers, pigments etc. may be improved by means of the reinforcement of the present invention.

It is clear that the invention is not limited to the examples mentioned above but can be implemented in many other different embodiments within the scope of the inventive idea. It is also clear that the features in each embodiment described above may be used in connection with the other embodiments whenever feasible.

## Claims

1. A unidirectional reinforcement for the manufacture of fiber reinforced composites, the unidirectional reinforcement (56) comprising continuous unidirectional rovings bonded to each other, the reinforcement (56) having a top surface and a bottom surface and being provided with means for facilitating the impregnation of the reinforcement (56) with resin, **characterized in that** the impregnation facilitating means are uniform transverse flow channels (62) extending from one edge of the unidirectional reinforcement (56) to the opposite edge thereof, the transverse flow channels (62) being formed by means of monofilaments (60) arranged transverse to the unidirectional rovings.

2. The unidirectional reinforcement as recited in claim 1, **characterized in that** the monofilaments (60) are arranged side by side at a distance from one another.

3. The unidirectional reinforcement as recited in claim 1, **characterized in that** the reinforcement (56) is formed of one or more layers of rovings.

4. The unidirectional reinforcement as recited in claim 3, **characterized in that** the monofilaments are arranged between layers of rovings in the unidirectional reinforcement (56).

5. The unidirectional reinforcement as recited in claim 3, **characterized in that** the monofilaments (60) are arranged on at least one of the top surface and the bottom surface of the unidirectional reinforcement (56).

6. The unidirectional reinforcement as recited in claim 1, **characterized in that** the continuous unidirectional rovings are bonded to each other by means of a thermoplastic binder, and that the monofilaments (60) are bonded to the rovings by means of the same binder as the rovings are bonded to one another, or that the monofilaments (60) are bicomponent monofilaments having an outer layer comprising a binder used for bonding the monofilaments to the rovings.

7. The unidirectional reinforcement as recited in claim 2, **characterized in that** the monofilaments (60) are positioned at a distance of 3 - 50 mm from one another.

8. The unidirectional reinforcement as recited in claim 1, **characterized in that** the monofilaments (60) have a diameter of 10 - 1000 µm, preferably 30 - 500 µm.

9. The unidirectional reinforcement as recited in claim 1, **characterized in that** the monofilament (60) has an elongation at break higher than that of the surrounding matrix in the final product.

10. The unidirectional reinforcement as recited in claim 1, **characterized in that** the monofilaments (60) are either single monofilaments or the monofilaments are formed of at most five monofilaments twisted together.

11. The unidirectional reinforcement as recited in claim 1, **characterized in that** the reinforcement (2') is provided with longitudinal non-continuous flow channels parallel with the rovings for facilitating the impregnation of the reinforcement (2') with resin.

12. A method of producing a unidirectional reinforcement for fiber reinforced composites comprising the steps of:
a) laying continuous rovings unidirectionally side by side for forming a web (42),
b) laying monofilaments (60) in a direction transverse to the direction of the unidirectional rovings on the continuous rovings,
c) bonding the monofilaments (60) on the continuous rovings.

13. The method as recited in claim 12, **characterized by**, in step a), laying continuous rovings unidirectionally side by side in at least one layer for forming a unidirectional web (42), and, in step b) laying monofilaments on the unidirectional web (42).

14. The method as recited in claim 13, **characterized by**, in step a) laying the continuous rovings unidirectionally side by side in more than one layer for forming a multi-layer unidirectional web (42) and laying monofilaments (60) between at least two layers of the continuous rovings.

15. The method as recited in claim 12, 13 or 14, **characterized by**, after step a), applying (46) binder in communication with the rovings for bonding the rovings together, and in step c) bonding the monofilaments (60) to the rovings by means of the binder.

16. The method as recited in claim 15, **characterized by**, in step c), heating the web (42) for melting the binder, the molten binder being used for bonding both the rovings together and the monofilaments (60) to the rovings.

17. The method as recited in claim 12, 13 or 14 **characterized by**, after step a), applying (46) binder in communication with the rovings for bonding the rovings together, and between steps a) and b), heating the web (42) for melting the binder to bond the rovings to one another for forming the reinforcement (56).

18. The method as recited in claim 12, 13, 14 or 17, **characterized by**, in step c), bonding the monofilaments (60) to the rovings by means of a binder applied on the rovings together with the monofilament (60) or by means of stitches bonding the rovings together.

19. The method as recited in claim 18, **characterized by** providing the monofilaments (60) with an outer layer comprising a thermoplastic binder, and, in step c), melting the binder from the outer layer to bond the monofilaments (60) to the rovings.

20. The method as recited in claim 12, **characterized by** providing the reinforcement (2') with longitudinal non-continuous flow channels parallel with the rovings for facilitating the impregnation of the reinforcement (2') with resin.
